# FASCICULE DE BREVET EUROPEEN

(11) **EP 3 656 492 B1**
(45) Date de publication et mention de la délivrance du brevet: **17.03.2021**
(21) Numéro de dépôt: 19210102.0
(22) Date de dépôt: 19.11.2019
(51) Int. Cl.: B22F 3/15, B23K 20/00, B23K 20/02, B23K 20/227, B23K 20/24, B23K 26/38, B23K 26/40, F24S 20/20, F28F 9/02

(54) **PROCEDE DE REALISATION D'UN COLLECTEUR D'ECHANGEUR DE CHALEUR AVEC COMPRESSION ISOSTATIQUE A CHAUD (CIC), APPLICATION A LA REALISATION D'ABSORBEUR POUR CENTRALE SOLAIRE THERMIQUE A CONCENTRATION**
HERSTELLUNGSVERFAHREN EINES WÄRMETAUSCHERKOLLEKTORS DURCH HEISSISOSTATISCHES PRESSEN (HIP), EINSATZ ZUR HERSTELLUNG EINES ABSORBERS FÜR KONZENTRIERENDES SOLARTHERMISCHES KRAFTWERK
METHOD FOR PRODUCING A MANIFOLD FOR HEAT EXCHANGER WITH HOT ISOSTATIC PRESSING (HIP), APPLICATION TO THE PRODUCTION OF AN ABSORBER FOR CONCENTRATING THERMAL SOLAR POWER PLANT

(30) Priorité: 23.11.2018 FR 1871740
(43) Date de publication de la demande: 27.05.2020
(73) Titulaire: Commissariat à l'Energie Atomique et aux Energies Alternatives, 75015 Paris (FR)
(72) Inventeur: CHOMETTE, Sébastien, 38054 Grenoble Cedex 9 (FR); MONTEREMAND, Mathieu, 38054 Grenoble Cedex 9 (FR); VIDOTTO, Fabien, 38054 Grenoble Cedex 9 (FR)
(74) Mandataire: Nony

(56) Documents cités:
- WO-A1-2017/061850
- US-A- 5 467 528
- US-A1- 2003 163 990
- US-A1- 2004 013 585
- US-A1- 2012 301 344
- US-A1- 2013 152 917
- US-A1- 2014 000 841
- US-B1- 6 192 596

## Description

### Domaine technique

La présente invention concerne les échangeurs de chaleur à au moins un circuit de fluide comportant des canaux.

L'invention a trait plus particulièrement à un nouveau procédé de fabrication de collecteurs de fluide pour échangeur de chaleur ainsi qu'un échangeur de chaleur comprenant un tel collecteur.

Les échangeurs de chaleur connus comprennent soit un soit au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit.

Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci.

De tels réacteurs chimiques à deux circuits de fluide avec utilité sont usuellement appelés échangeurs-réacteurs.

La présente invention concerne aussi bien la réalisation de collecteurs d'échangeurs de chaleur à fonction uniquement d'échanges thermiques que la réalisation de collecteurs d'échangeurs-réacteurs.

Aussi, par « échangeur de chaleur à au moins un circuit de fluide », il faut comprendre dans le cadre de l'invention, aussi bien un échangeur de chaleur à fonction uniquement d'échanges thermiques qu'un échangeur-réacteur.

Une application privilégiée pour l'invention est la réalisation d'absorbeurs pour centrales solaires thermiques à concentration.

### Technique antérieure

Dans la plupart des échangeurs de chaleur existants, les collecteurs de fluides sont réalisés par fonderie ou par des procédés d'assemblage permanent, comme la soudure.

Dans le premier cas, les collecteurs issus de fonderie peuvent avoir des formes complexes et des états de surface permettant de répondre à des exigences en termes de pertes de charges (faible rugosité, précision dimensionnelle élevée, tolérances réduites).

Cependant, cette technique peut s'avérer complexe et difficile à mettre en œuvre pour des matériaux à haut point de fusion, comme par exemple avec des aciers inoxydables avec des points de fusion supérieurs à 1400 °C, nécessaires dans le cas d'une utilisation en milieu extrême mettant en œuvre des températures élevées et/ou en milieu corrosif.

De plus, les matériaux de moulage sont souvent assez onéreux, et les procédés de fonderie de manière générale nécessitent des outillages et des installations chers, amortis sur des grandes séries.

Par ailleurs, la mise au point de ces procédés peut être délicate. Des défauts de matière, qui peuvent intervenir lors de la mise en œuvre de la fonderie, risquent de fragiliser les pièces fabriquées. Ces défauts peuvent s'aggraver en conditions extrêmes (température, pression, milieu corrosif...) et fragiliser davantage les pièces.

L'assemblage par soudage est une technique éprouvée au niveau international, pour la fabrication d'appareils en pression. Elle permet de réaliser des collecteurs rapidement et suivant des règles de conception, de fabrication et de test permettant de garantir un fonctionnement dans les normes de sécurité en vigueur (Directive de Equipements sous Pression 2014/68/UE, standard ASME « Boiler and Pressure Vessel Code », etc...). Cependant, un assemblage par soudage demande un savoir-faire important de l'opérateur, sur le choix de la technique précise mise en œuvre et des matériaux utilisés.

De plus, un assemblage par soudage nécessite des tests préliminaires de validation des paramètres de fabrication (Qualification du Mode Opératoire de Soudage), afin d'obtenir des conditions pouvant être reproductibles.

Par ailleurs, si les géométries des collecteurs sont complexes, la durée de réalisation pourra être importante et son coût élevé.

Enfin, du fait de la fusion de matières, la différence de matière résultante entre les zones soudées et le reste du collecteur est à prendre en compte dans le dimensionnement.

La fabrication de collecteurs de forme générale parallélépipédique est particulièrement compliquée lorsqu'elle est réalisée selon l'une ou l'autre des deux techniques précitées. En fonderie, les angles vifs sont difficiles à maitriser avec précision.

Pour l'assemblage par soudage, dans certains cas, réaliser des soudures en pleine pénétration peut s'avérer compliqué, par exemple des soudures proches pour fixation de renforts internes sont difficiles à maitriser. On rappelle ici qu'une soudure pleine pénétration est une fusion de la soudure et du métal de base qui est complète sur l'épaisseur de l'assemblage. L'assemblage par soudage-diffusion est un procédé qui consiste à obtenir un assemblage à l'état solide en appliquant une force à chaud sur les pièces à assembler pendant un temps donné. La force appliquée a une fonction double : elle permet l'accostage, c'est-à-dire la mise en contact des surfaces à souder et elle facilite l'élimination par fluage-diffusion de la porosité résiduelle dans les joints (interfaces).

La technique d'assemblage par soudage diffusion peut être mise en œuvre par compression uni-axiale à chaud qui consiste à appliquer simultanément une température élevée et un chargement perpendiculaire aux pièces à assembler pendant un temps suffisant pour assurer le soudage des pièces constitutives entre elles.

Une limitation importante du procédé de soudage diffusion uni-axial tient au fait qu'il ne permet pas de souder des joints d'orientation quelconques par rapport à la direction d'application de la force de compression uni-axiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uni-axial est qu'il est plus largement répandu à l'échelle industrielle. En effet, la CIC est aussi utilisée pour le traitement par lots de pièces de fonderie ainsi que pour la compaction de poudres.

Dans le procédé de soudage-diffusion par CIC, l'assemblage des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. L'action conjointe de la pression et de la température permet le soudage par diffusion des pièces entre elles.

La technique d'assemblage par soudage diffusion par Compression Isostatique à Chaud (CIC) est déjà décrite pour l'assemblage de modules d'échangeur de chaleur dans les demandes de brevets WO 2013/150458 et WO 2014/181297 au nom de la déposante. Dans ces procédés, les modules sont obtenus par un assemblage par soudage-diffusion et les collecteurs sont fixés au module par soudage classique ou par des moyens mécaniques de vis-écrou et joint métallique selon l'utilisation envisagée.

Les collecteurs ainsi utilisés sont fabriqués préalablement par fonderie ou assemblage par soudage.

Cette approche oblige de disposer de différents modes opératoires de soudage pour les différents éléments d'un même module La demande de brevet US2004/0013585 A1 divulgue un collecteur fabriqué par CIC, mais il manque d'un renforcement.

Il existe donc un besoin d'améliorer encore les procédés de réalisation de collecteurs d'échangeurs de chaleur notamment afin de pallier les inconvénients précédents.

Le but de l'invention est de répondre au moins partiellement à ce besoin.

### Exposé de l'invention

Pour ce faire, l'invention a pour objet un procédé de réalisation d'un collecteur d'échangeur de chaleur à au moins un circuit de fluide, comportant les étapes suivantes, dont l'étape b1) forme l'étape inventive :
a) réalisation des éléments d'un collecteur d'échangeur de chaleur, dont une partie constitue la structure principale avec le passage de distribution de fluide;
b) assemblage mécanique entre les éléments la structure principale et le cas échéant étanchéification des jonctions entre les éléments du collecteur assemblés formant ainsi un assemblage étanche;
   b1) assemblage et d'étanchéification entre eux d'un ou plusieurs éléments d'une enveloppe interne à la structure principale, avec la structure principale ;
c) réalisation d'une étape de soudage-diffusion par Compression Isostatique à Chaud (CIC) de l'assemblage étanche obtenu à l'étape b).

Ainsi, l'invention est essentiellement un procédé de réalisation de collecteurs pour des échangeurs de chaleur à au moins un fluide, selon lequel l'assemblage des éléments définissant la distribution/collecte de fluide est réalisé par soudage-diffusion par Compression isostatique à chaud (CIC), la mise en œuvre d'un élément de renfort permettant d'éviter la déformation destructive de la structure principale entourant le passage lors du CIC.

Le procédé selon l'invention présente trois avantages significatifs par rapport aux procédés traditionnels de fabrication des collecteurs d'échangeur de chaleur à au moins un circuit de fluide, tels que décrits en préambule.

Ainsi, l'invention permet tout d'abord de réduire la complexité de réalisation d'un collecteur d'échangeur. En effet, la soudure est réalisée uniquement aux jonctions des éléments et donc avec moins de contraintes que dans le cas de soudures en pleine pénétration dans les assemblages par soudage selon l'état de l'art. Cette mise en œuvre des soudures aux jonctions est d'autant plus simple par rapport aux soudures pleine pénétration, que les collecteurs sont dimensionnés avec de fortes épaisseurs.

A part l'étape de soudage par diffusion, les autres étapes de fabrication du procédé selon l'invention sont simples et les équipements afférents relativement peu onéreux. Ainsi, l'invention permet de réduire les coûts et les délais de fabrication d'un collecteur d'échangeur de chaleur à au moins un circuit de fluide.

Enfin, grâce à l'invention, le soudage par diffusion des pièces entre elles permet d'obtenir des caractéristiques améliorées, du fait de l'absence de fusion et d'un traitement thermique homogène de tout le collecteur durant le traitement par CIC (propriétés mécaniques, microstructure, etc.).

Selon un mode de réalisation avantageux, à l'étape b), on assemble aussi au moins un élément de renfort de la structure principale et l'enveloppe interne à la structure principale, l'assemblage avec ladite enveloppe étant étanche.

Selon ce mode et une variante de réalisation, l'assemblage dudit élément de renfort comprend une étape d'insertion de tenons de l'élément de renfort respectivement dans deux lumières réalisées dans des éléments de la structure principale en face à face.

L'élément de renfort permet d'améliorer les propriétés mécaniques du collecteur lors de son utilisation. Il est envisageable de mettre en place plusieurs éléments de renfort dans le collecteur.

Selon une variante avantageuse, après l'étape b1), on réalise une étape b2) d'assemblage et d'étanchéification entre eux d'un ou plusieurs éléments d'une enveloppe externe à la structure principale, avec la structure principale et le cas échéant avec l'élément de renfort. L'ajout des enveloppes interne et externe est avantageux si l'on souhaite réaliser des soudures classiques loin des interfaces à souder par CIC. Ainsi, les interfaces à souder par CIC ne sont pas soumises à la chaleur de la soudure classique et de ce fait minimise leur oxydation. Les jonctions des interfaces par soudage CIC peuvent être donc améliorées. Selon un autre mode de réalisation l'étape b) comprend l'assemblage entre au moins deux éléments de la structure principale par un système de tenons/mortaises. Ce mode permet d'améliorer davantage les propriétés mécaniques des jonctions entre les éléments de la structure principale.

Avantageusement, le cycle de soudage diffusion par CIC selon l'étape c) est réalisé à une température comprise entre 1000 et 1200°C et à une pression comprise entre 500 et 1500 bar. De préférence, le cycle est réalisé pendant une durée comprise entre 2h et 10h avec une montée en température d'une durée comprise entre 1h et 4h et un maintien d'une durée comprise entre 1h et 6h.

De manière avantageuse, après l'étape c), on réalise une étape d) d'usinage de la surface extérieure du collecteur. Pour obtenir entre autres un état de surface convenable pour le collecteur fini.

Dans un autre mode réalisation, avant l'étape c), on réalise l'assemblage et l'étanchéification entre une partie des éléments du collecteur et une partie d'un échangeur de chaleur à au moins un circuit de fluide.

Ainsi, le collecteur selon l'invention peut être directement assemblé sur un échangeur de chaleur avant la mise en œuvre de l'étape c) de soudage diffusion par CIC. Ce mode est d'autant plus avantageux si l'échangeur de chaleur est lui-même réalisé par soudage diffusion par CIC. Il est tout de même possible de réaliser l'échangeur de chaleur par une autre méthode d'assemblage et par la suite d'assembler et fixer le collecteur sur ce dernier par CIC.

L'invention a aussi pour objet un collecteur d'échangeur de chaleur à au moins un circuit de fluide obtenu selon le procédé tel que décrit précédemment.

L'invention a également pour objet un module d'échangeur de chaleur à au moins un circuit de fluide comprenant au moins deux collecteurs comme ci-dessus.

L'invention a enfin pour objet l'utilisation d'un collecteur d'échangeur de chaleur ou un échangeur de chaleur comme ci-dessus en tant qu'absorbeur pour centrales solaires à concentration haute température.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue en perspective d'une partie d'une enveloppe interne d'un collecteur selon la présente invention ;
[Fig 1A] est une vue de face et une vue de profil de la partie de l'enveloppe interne selon la figure 1 ;
[Fig 2] est une vue en perspective d'une pièce complémentaire à la partie de l'enveloppe interne illustrés aux figures 1 et 1A ;
[Fig 3] est une vue en perspective des pièces d'une enveloppe externe d'un collecteur selon la présente invention ;
[Fig 4] est une vue en perspective d'une partie des pièces de la structure principale d'un collecteur selon la présente invention ;
[Fig 5] est une vue en perspective d'une pièce de renfort interne à la structure principale d'un collecteur selon la figure 4 ;
[Fig 6] est une vue en perspective du dessus et de dessous d'une pièce de la structure principale formant la connexion avec un tube de distribution/collecte ;
[Fig 7] est une vue de profil d'une pièce latérale de la structure principale du collecteur après une étape de reprise des chants ;
[Fig 8] est une vue en perspective d'un tube de distribution/collecte du collecteur ;
[Fig 9] est une vue en perspective montrant une étape d'assemblage de l'élément de renfort sur la partie de l'enveloppe interne illustrée en figure 1 ;
[Fig 10] est une vue en perspective montrant une étape de fermeture de l'enveloppe interne après assemblage avec l'élément de renfort ;
[Fig 11] est une vue en perspective d'assemblage par soudure entre le tube de distribution/collecte selon la figure 8 et la pièce de connexion selon la figure 6 ;
[Fig 12] montre une zone de soudure d'étanchéité entre l'assemblage de la figure 11 et l'enveloppe interne du collecteur ;
[Fig 13] est une vue en perspective illustrant une étape de mise en place de deux pièces de la structure principale sur l'assemblage étanche de la figure 12 ;
[Fig 14] est une vue en perspective illustrant une étape de mise en place de deux autres pièces de la structure principale sur l'assemblage étanche de la figure 12 ;
[Fig 15] est une vue en perspective illustrant une étape de mise en place de deux pièces de l'enveloppe externe sur la structure principale mise en place selon la figure 14 ;
[Fig 16] est une vue en perspective illustrant une étape de mise en place de deux autres pièces de l'enveloppe externe sur la structure principale ;
[Fig 17] est une vue en perspective d'une étape de mise en place d'une pièce inférieure de l'enveloppe externe sur la structure principale ;
[Fig 18] est une vue en perspective et de côté d'une pièce de la structure principale du collecteur selon une variante de réalisation de la présente invention ;
[Fig 19] est une vue en perspective et de côté de deux autres pièces de la structure principale du collecteur selon la même variante de réalisation que la figure 18 ;
[Fig 20] est une vue en perspective des pièces de la structure principale réalisées selon la figure 18 et selon la figure 19, assemblées entre elles ;
[Fig 21] est une vue en perspective d'une plaque à tubes d'un échangeur de chaleur destiné à être assemblée directement avec un collecteur selon une autre variante de réalisation de la présente invention ;
[Fig 22] est une vue en perspective d'assemblage entre l'enveloppe interne avec la pièce de renfort interne du collecteur et la plaque à tubes de la figure 21 selon l'autre variante de réalisation ;
[Fig 23] est une vue en perspective de mise en place de l'enveloppe externe autour de l'assemblage réalisé selon la figure 22 ;

### Description détaillée

On décrit ci-après un exemple de réalisation d'un collecteur parallélépipédique, de forme générale en tronc de pyramide, d'un échangeur de chaleur à au moins un circuit selon l'invention.

Etape a): On réalise tout d'abord les pièces qui constitueront la structure principale du collecteur, l'enveloppe interne et l'enveloppe externe.

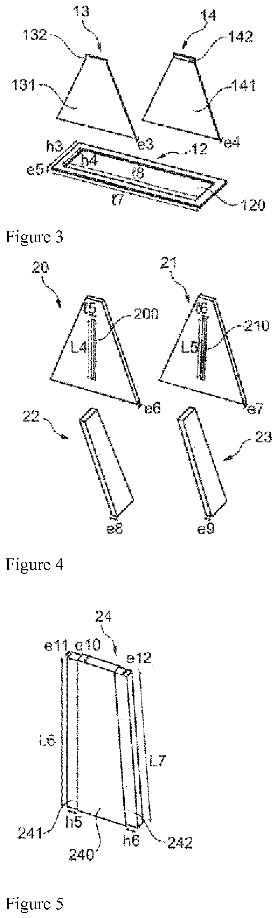

Etape a1): On réalise ainsi les différentes pièces 20, 21, 22, 23, 24, 30 et 40 constitutives du collecteur. Les pièces 20, 21, 22, 23 et 30 sont découpées dans les tôles métalliques d'épaisseurs e6, e7, e8, e9 et e13+e15, telles qu'illustrées sur les figures 4, 5 et 6.

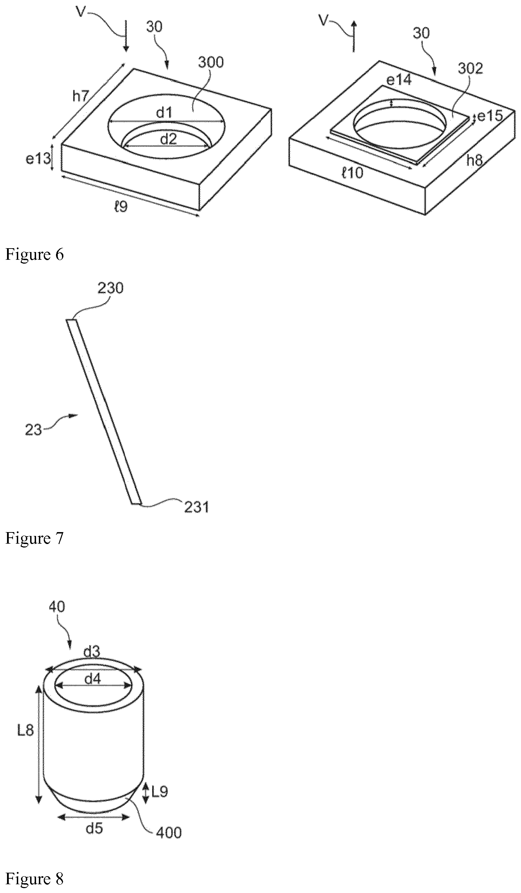

Parmi ces pièces, les pièces 20 à 23, de forme trapézoïdale, définissent la géométrie de passage du fluide à collecter/distribuer tandis que la pièce 30 est une pièce de connexion avec un tube de distribution/collecte de fluide 40 tel que montré en figure 8.

Des lumières longitudinales 200 et 210, et de dimensions 15^{∗}L4 et 16^{∗}L5, sont réalisées individuellement respectivement dans la pièce 20 et la pièce 21. De préférence, comme illustré, ces lumières 200, 210 sont centrales et traversantes.

L'ensemble des pièces de la structure principale sont découpées de préférence par découpe laser.

A part l'une des pièces trapézoïdales, la pièce 20, les autres pièces 21, 22, 23 et 30 de la structure principale subissent des étapes complémentaires de reprise des chants afin de permettre leurs ajustements entre elles et avec une enveloppe externe mise en place par la suite.

Les pièces trapézoïdales 21, 22 et 23 ne subissent que des reprises des bords extérieurs, afin de réaliser des plans inclinés, comme illustré sur la figure 7 pour la pièce 23 avec les bords 230 et 231.

Comme illustré en figure 6, la pièce 30 a des dimensions initiales égales à (e13+e15)^{∗}h7^{∗}19. On réalise dans un sens V un perçage de forme cylindrique sur la partie centrale de la pièce 30 et un chanfrein 300 pour passer d'un diamètre d1 à un diamètre d2 et laisser un trou cylindrique d'une épaisseur e14. On réalise ensuite dans un sens contraire à V une reprise du pourtour de la face inférieure de la pièce 30 afin de conserver un parallélépipède rectangle 302 de dimension e15^{∗}h8^{∗}110.

Un tronçon de tube de diamètre extérieur d3 et intérieur d4 et de longueur L8 est utilisé pour la fabrication du tube de distribution/collecte 40 (Figure 8). Un chanfrein 400 est réalisé sur une des extrémités du tube 40 afin de passer d'un diamètre d3 à un diamètre d5 sur une longueur L9.

Les reprises des chants des pièces du collecteur sont réalisées par usinage conventionnel type fraisage pour les faces planes et tournage pour les géométries de révolution.

A titre d'exemple :
- les plaques utilisées pour la réalisation des pièces de la structure collecteur sont en acier inoxydable 1.4404 d'épaisseur e6=e7=e8=e9=e10=e13+e15 de l'ordre de 10mm ;
- les lumières 200 et 210 sont identiques et ont une section égale à 15^{∗}L4=16^{∗}L5 de l'ordre de 9^{∗}129mm. ;
- la pièce de connexion 30 présente des dimensions initiales égales à (e13+e15)^{∗}h7^{∗}19 de l'ordre de 10^{∗}56^{∗}56,5mm. La reprise du trou central permet de conserver un trou cylindrique de diamètre d2 égal à 32,46mm sur une épaisseur el4 égale à 2mm, le chanfrein 300 passe donc d'un diamètre d1=42,16mm à un diamètre d2=32,46mm. La reprise de la face par fraisage est centrée sur le perçage sur une épaisseur e15=1mm. Les autres dimensions de la partie 302 parallélépipédique en excroissance sont h8^{∗}110 égales à 36^{∗}35,2mm ;
- le tube de distribution/collecte 40 est en acier inoxydable 1.4404, avec un diamètre extérieur d3=42,16mm, un diamètre intérieur d2=32,46mm sur une longueur L8=50mm. Le chanfrein 400 est réalisé sur une longueur L9=e13=8mm.

Ensuite, la pièce de renfort 24 de la structure principale du collecteur est réalisée. Cette pièce de renfort 24 illustrée en figure 5 est aussi réalisée, de préférence par découpe d'une tôle métallique d'épaisseur e10. La découpe est de préférence réalisée par laser.

Cette pièce de renfort 24 nécessite un usinage précis, afin qu'elle puisse s'imbriquer convenablement dans les pièces 20 et 21. La pièce de renfort 24 permet d'améliorer les propriétés mécaniques du collecteur lors de son utilisation.

Les deux bords longitudinaux de cette pièce de renfort 24 sont conformées sous la forme de tenons 241, 242 de forme parallélépipède rectangle. Le tenon 241 a des dimensions e11^{∗}h5^{∗}L6 tandis que le tenon 242 a des dimensions e12^{∗}h6^{∗}L7.

A titre d'exemple, la pièce de renfort 24 est une plaque 240 analogue aux plaques qui forment la structure principale du collecteur, mais dont on effectue une reprise des bords longitudinaux.

La reprise de ces deux bords permet d'obtenir les deux tenons 241, 242 de formes parallélépipèdes rectangles identiques, avec des dimensions e11^{∗}h5^{∗}L6=e12^{∗}h6^{∗}L7 égales à 8,8^{∗}11^{∗}128,8mm.

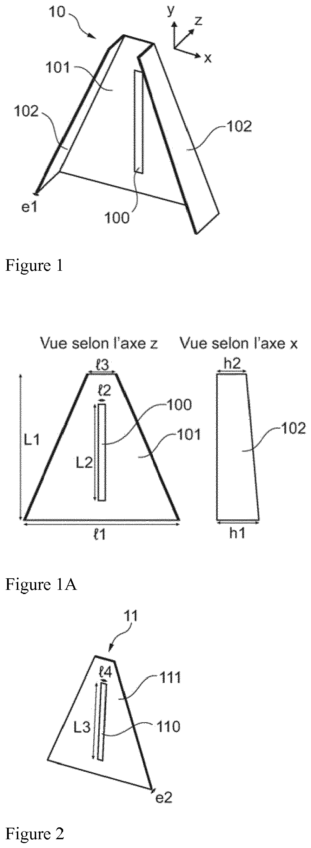

Etape a2): On réalise les pièces 10 et 11 constitutives de l'enveloppe interne, telles qu'illustrées sur les figures 1, 1A et 2. Elles sont découpées dans des tôles métalliques d'épaisseurs e1 et e2.

Des lumières longitudinales 100 et 110, de dimensions 12^{∗}L2 et 14^{∗}L3, sont réalisées individuellement respectivement dans la pièce 10 et la pièce 11.

Les pièces 10 et 11 sont découpées de préférence par découpe laser.

La pièce 10 est obtenue par mise en forme, de préférence par pliage mécanique à partir d'une plaque découpée précédemment.

La pièce pliée 10 présente une grande section trapézoïdale 101 de dimensions égales à ((11+13)^{∗}L1)/2.

Sur chaque côté longitudinal de la section trapézoïdale est pliée une petite section trapézoïdale 102 de dimensions égales à ((h1+h2)^{∗}L1)/2

A titre d'exemple :
- les plaques 10, 11 l'enveloppe interne sont en acier inoxydable 1.4404 avec une épaisseur el=e2=lmm. Les lumières 100 et 110 sont identiques et ont une section de dimensions 12^{∗}L2=14^{∗}L3 égales à 9^{∗}129mm.
- la pièce 10 pliée a pour dimensions 11^{∗}h1=188^{∗}50mm, 13^{∗}h2=34^{∗}34mm et L1=195mm.

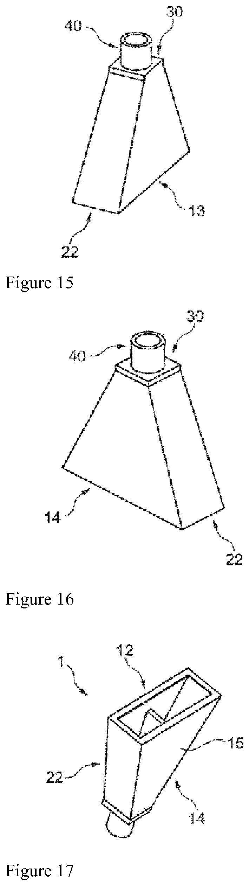

Etape a3): On réalise ensuite les pièces 12, 13 et 14 constitutives de l'enveloppe externe, telles qu'illustrées sur la figure 3. Elles sont découpées dans des tôles métalliques d'épaisseurs e3, e4 et e5 respectivement. La pièce 12, de section 17^{∗}h3 est percée une lumière centrale 120 de section 18^{∗}h4. Les pièces sont découpées de préférence par découpe laser. Chacune des pièces 13, 14 de section trapézoïdale est obtenue par mise en forme, de préférence par pliage mécanique, de la petite base 132, 142 par rapport à la surface 131, 141. Cette mise en forme permet d'ajuster l'enveloppe externe 14 à la pièce de connexion 30 (Figure 16).

A titre d'exemple, les plaques utilisées pour la réalisation des pièces 12, 13, 14 de l'enveloppe externe sont en acier inoxydable 1.4404 d'épaisseur e3 = e4 = e5 = 1mm. La pièce 12 a pour dimensions externes 17 x h3 = 212^{∗}74mm et une lumière centrale 120 de section 18^{∗}h4=188^{∗}50mm.

Etape b): On réalise ensuite l'assemblage mécanique entre toutes les pièces de la structure principale, de l'enveloppe interne et de l'enveloppe externe.

Etape b1): Dans cette étape on réalise l'assemblage de l'enveloppe interne et de la structure principale du collecteur.

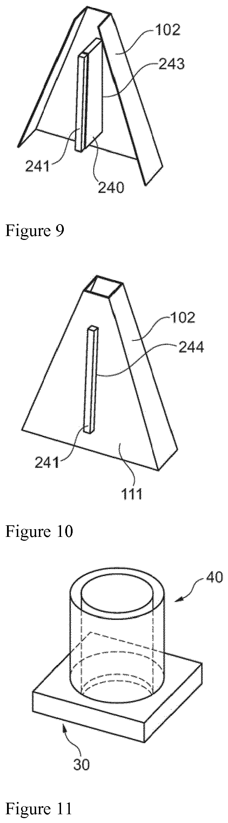

Tout d'abord, la pièce de renfort interne 24 est insérée dans la lumière 100 de la partie principale de l'enveloppe interne 10 (Figure 9).

Le tenon 242 traverse entièrement la lumière 100 et est en butée contre la surface 101 de la pièce 10. Une soudure d'étanchéité est ensuite réalisée sur l'intégralité de la jonction 243 entre ces deux pièces.

Ensuite, la pièce 11 est mise en place en venant fermer l'enveloppe interne : le tenon 241 traverse entièrement la lumière 110 et est en butée contre la surface 111 de la pièce 11 (Figure 10). Une soudure d'étanchéité est réalisée sur l'intégralité de la jonction 244 entre ces deux pièces mais également sur l'intégralité des jonctions entre les pièces 10 et 11 de l'enveloppe interne.

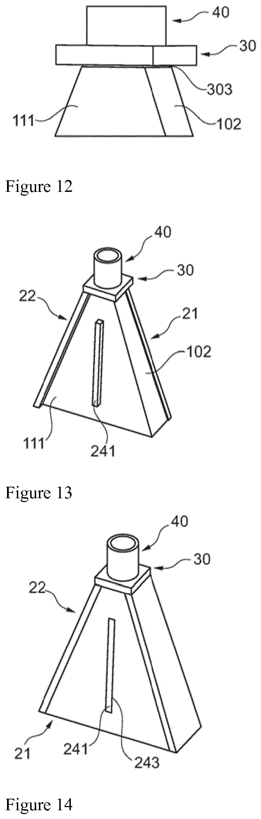

La pièce de connexion 30 et le tube de distribution/collecte 40 sont assemblés par soudure classique puis l'ensemble est monté sur l'enveloppe interne. L'excroissance parallélépipédique 303 de la pièce de connexion vient ainsi se placer sur la partie supérieure de l'enveloppe interne et une soudure est réalisée sur l'ensemble de la jonction entre l'assemblage des pièces 30 et 40 d'un côté et des pièces 10 et 11 de l'autre, comme illustré sur la figure 12.

Les soudures d'étanchéification réalisées lors de l'étape b1) permettent notamment d'éviter que le gaz CIC ne pénètre à l'interface de l'enveloppe interne et les pièces du collecteur. A titre d'exemple, les soudures de cette étape b1) sont réalisées par soudure conventionnelle type TIG (Tungsten Inert Gas) sans métal d'apport.

Les autres pièces 20, 21, 22 et 23 de la structure principale du collecteur sont mises en place sur l'enveloppe interne (Figures 13 et 14). Les tenons 241, 242 de la pièce de renfort 24 sont insérés dans les lumières 200 et 210 des pièces 20 et 21 du collecteur.

Etape b2): On réalise ensuite l'assemblage mécanique entre toutes les pièces de l'enveloppe externe et l'assemblage de l'étape b1. En effet, les pièces 12, 13 et 14 de l'enveloppe externe sont mises en place sur l'assemblage obtenu selon les étapes précédentes (Figures 15, 16, 17).

Une soudure d'étanchéité est réalisée sur l'ensemble des jonctions entre les différentes pièces 12, 13, 14 de l'enveloppe externe et les pièces de l'assemblage déjà réalisé.

A titre d'exemple, la soudure de cette étape b2 est réalisée par soudure conventionnelle type TIG sans métal d'apport.

Etape c): Le collecteur assemblé avec l'enveloppe interne, la structure principale et l'enveloppe externe et étanchéifié aux jonctions, est soumis à un soudage diffusion par Compression Isostatique à Chaud (CIC).

A titre d'exemple, lorsque les différentes pièces sont en acier inoxydable, le cycle de CIC appliqué est réalisé à une température de 1160°C sous une pression de 1000bar avec une montée en température d'une durée de 3h et un maintien d'une durée de 2h.

Etape d): A l'issue du soudage diffusion par CIC, on réalise une étape d'usinage finale sur la surface extérieure de la pièce 12. L'usinage final peut être une étape de fraisage permettant d'obtenir un état de surface convenable.

Le collecteur d'échangeur 1 finalement obtenu est montré en figure 17.

Dans le mode de réalisation qui vient d'être décrit, les soudures réalisées par soudage diffusion par CIC entre les éléments du collecteur sont faites sur des surfaces planes.

Dans certains cas, des joints plans réalisés par soudage diffusion peuvent avoir des caractéristiques mécaniques plus faibles que le matériau de base des pièces du collecteur suivant les alliages utilisés.

Aussi, afin d'améliorer les caractéristiques mécaniques de l'assemblage, certaines pièces du collecteur peuvent être assemblées entre elles par un système de queue d'aronde, i.e. entre une rainure et une languette de forme complémentaire.

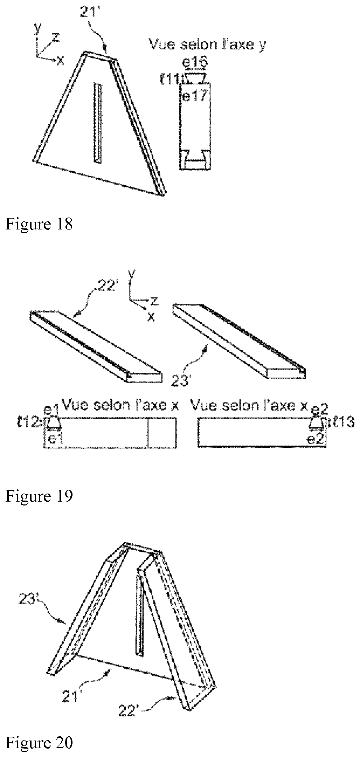

Cette variante d'assemblage par un système de tenons/mortaises est illustrée sur les figures 18, 19 et 20.

Ainsi, des languettes en forme de trapèze sont réalisées sur les côtés longitudinaux de la pièce 21' (forme en queue d'aronde). La grande base des languettes a une épaisseur e16, la petite base a une épaisseur e17 et la hauteur du trapèze est l11 (Figure 18).

Les rainures en forme de trapèze complémentaire à celle des languettes sont réalisées sur les côtés longitudinaux des pièces 22' et 23' comme montré sur la figure 19. La grande base des rainures a une épaisseur e18, e21, la petite base a une épaisseur e19, e20 et la hauteur du trapèze est égale l12 et l13.

A titre d'exemple, la réalisation des languettes et rainures est effectuée par un usinage conventionnel, de type fraisage. Les dimensions des languettes et rainures sont e16=e18=e21=8mm et e17=e19=e20=l11=l12=l13=5mm.

Les pièces 21', 22' et 23' sont ainsi assemblées par les systèmes de queue d'aronde avec les rainures et languettes emboitées l'une dans l'autre.

Dans ce mode de réalisation, seul l'assemblage des pièces 21', 22' et 23' diffère par rapport au premier mode de réalisation décrit ci-dessus. Ainsi, la mise en place des enveloppes interne et externe ainsi que celle de l'élément de renfort restent identiques au premier mode de réalisation.

Selon un mode de réalisation avantageux, le collecteur selon l'invention peut être directement assemblé sur un échangeur de chaleur avant la mise en œuvre de l'étape c) de soudage diffusion par CIC. Ce mode est d'autant plus avantageux si l'échangeur de chaleur est lui-même réalisé par soudage diffusion par CIC. Il est tout de même possible de réaliser l'échangeur de chaleur par une autre méthode d'assemblage et par la suite d'assembler et fixer le collecteur sur ce dernier par CIC.

Ainsi, en une seule étape par soudage diffusion par CIC, on peut obtenir un échangeur de chaleur avec ses collecteurs.

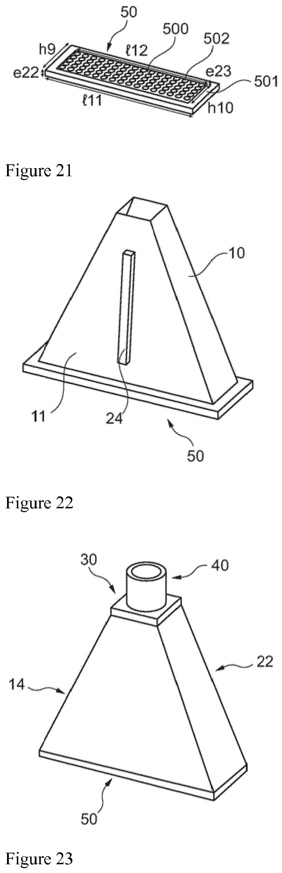

Ce mode de réalisation est illustré aux figures 21 à 23.

Telle qu'illustré en figure 21, une plaque à tubes 50 constitue une extrémité d'un échangeur de chaleur non représenté. Cette plaque à tubes 50, dont les dimensions sont e22^{∗}h9^{∗}l11, présente une excroissance parallélépipédique 500 de dimensions e23^{∗}h10^{∗}l12, en saillie par rapport au pourtour 501 de la plaque 50. Les tubes 502 constituant les canaux d'un circuit de fluide de l'échangeur à distribuer/collecter débouchent sur l'excroissance 500.

Ainsi, cette plaque à tubes 50 va prendre lieu et place de la pièce 12 de l'enveloppe externe lors de l'étape b1) d'assemblage (Figure 22).

Au cours de l'étape b1) une soudure d'étanchéité est réalisée sur tout le pourtour des jonctions entre la pièce 50 et respectivement les pièces 10, 11 de l'enveloppe interne. Au cours de l'étape b2 ou b3, une soudure d'étanchéité est réalisée sur tout le pourtour des jonctions entre la pièce 50 et respectivement les pièces 13, 14 de l'enveloppe externe et les pièces 22 et 23 (Figure 23).

L'ensemble collecteur et échangeur de chaleur assemblés avec leurs jonctions étanches est ensuite soumis à un cycle de soudage diffusion par CIC afin de souder l'ensemble des interfaces selon l'étape c).

A titre d'exemple, la plaque à tubes 50 est en acier inoxydable 1.4404 de dimensions e22^{∗}h9^{∗}l11 égales 9^{∗}74^{∗}212mm avec une excroissance 500 de dimensions e23^{∗}h10^{∗}l12 égales à 1^{∗}50^{∗}188mm. Toutes les autres pièces du collecteur sont identiques à celles vues dans l'exemple précédemment décrit. Les étapes de soudure avec la plaque 50 sont réalisées par TIG sans métal d'apport. Le cycle de CIC est identique à celui de l'exemple précédemment décrit.

D'autres variantes et améliorations peuvent être apportées sans pour autant sortir du cadre de l'invention.

## Revendications

1. Procédé de réalisation d'un collecteur d'échangeur de chaleur à au moins un circuit de fluide, comportant les étapes suivantes :
a) réalisation des éléments (20, 21, 22, 23, 24, 30, 40) d'un collecteur d'échangeur de chaleur, dont une partie (20, 21, 22, 23, 30, 40) constitue la structure principale avec le passage de fluide ;
b) assemblage mécanique entre les éléments (20, 21, 22, 23, 30, 40) de la structure principale et le cas échéant étanchéification des jonctions entre les éléments assemblés formant ainsi un assemblage étanche ;
b1) assemblage et d'étanchéification entre eux d'un ou plusieurs éléments (10, 11) d'une enveloppe interne à la structure principale, avec la structure principale ;
c) réalisation d'une étape de soudage-diffusion par Compression Isostatique à Chaud (CIC) de l'assemblage étanche obtenu à l'étape b).

2. Procédé selon la revendication 1, selon lequel à l'étape b), on assemble aussi un élément de renfort (24) de la structure principale et l'enveloppe interne à la structure principale, l'assemblage avec ladite enveloppe étant étanche.

3. Procédé selon la revendication 2, l'assemblage dudit élément de renfort (24) comprend une étape d'insertion de tenons (241, 242) de l'élément de renfort (24) respectivement dans deux lumières (20, 21) réalisées dans des éléments de la structure principale en face à face.

4. Procédé selon l'une quelconque des revendications précédentes, selon lequel après l'étape b1), on réalise une étape b2) d'assemblage et d'étanchéification entre eux d'un ou plusieurs éléments (12, 13, 14) d'une enveloppe externe à la structure principale, avec la structure principale et le cas échéant avec l'élément de renfort (24).

5. Procédé selon l'une quelconque des revendications précédentes, selon lequel l'étape b/ comprend l'assemblage entre au moins deux éléments (21',22',23') de la structure principale par un système de tenons/mortaises.

6. Procédé selon l'une quelconque des revendications précédentes, le cycle de soudage diffusion par CIC selon l'étape c) étant réalisé à une température comprise entre 1000 et 1200°C et à une pression comprise entre 500 et 1500 bar.

7. Procédé selon l'une quelconque des revendications précédentes, le cycle de soudage diffusion par CIC selon l'étape c) étant réalisé pendant une durée comprise entre 2h et 10h avec une montée en température d'une durée comprise entre 1h et 4h et un maintien d'une durée comprise entre 1h et 6h.

8. Procédé selon l'une quelconque des revendications précédentes, selon lequel après l'étape c), on réalise une étape d) d'usinage de la surface extérieure du collecteur.

9. Procédé selon l'une quelconque des revendications précédentes, selon lequel avant l'étape c), on réalise l'assemblage et l'étanchéification entre une partie des éléments du collecteur et une partie d'un échangeur de chaleur à au moins un circuit de fluide.

10. Collecteur d'échangeur de chaleur à au moins un circuit de fluide obtenu selon le procédé selon l'une quelconque des revendications 1 à 8.

11. Echangeur de chaleur à au moins un circuit de fluide comprenant au moins deux collecteurs selon la revendication 10.

12. Utilisation d'un collecteur d'échangeur de chaleur selon la revendication 10 ou d'un échangeur de chaleur selon la revendication 11 en tant qu'absorbeur pour centrales solaires à concentration haute température.

## Patentansprüche

1. Verfahren zur Herstellung eines Sammlers eines Wärmetauschers mit mindestens einem Fluidkreislauf, welches die folgenden Schritte umfasst:
a) Herstellung der Elemente (20, 21, 22, 23, 24, 30, 40) eines Sammlers eines Wärmetauschers, von denen ein Teil (20, 21, 22, 23, 30, 40) die Hauptstruktur mit dem Fluiddurchlass bildet;
b) mechanischer Zusammenbau der Elemente (20, 21, 22, 23, 30, 40) der Hauptstruktur und gegebenenfalls Abdichtung der Verbindungen zwischen den zusammengebauten Elementen, so dass eine dichte Baugruppe gebildet wird;
b1) Zusammenbau und gegenseitige Abdichtung eines oder mehrerer Elemente (10, 11) einer innerhalb der Hauptstruktur befindlichen Hülle mit der Hauptstruktur;
c) Durchführung eines Schrittes des Diffusionsschweißens durch heißisostatisches Pressen (HIP) der in Schritt b) erhaltenen dichten Baugruppe.

2. Verfahren nach Anspruch 1, wobei in Schritt b) auch ein Verstärkungselement (24) der Hauptstruktur und die innerhalb der Hauptstruktur befindliche Hülle zusammengebaut werden, wobei die Baugruppe mit der Hülle dicht ist.

3. Verfahren nach Anspruch 2, wobei die Montage des Verstärkungselements (24) einen Schritt des Einsetzens von Zapfen (241, 242) des Verstärkungselements (24) in jeweils einen von zwei Schlitzen (20, 21) umfasst, die einander gegenüber in Elementen der Hauptstruktur ausgebildet ist.

4. Verfahren nach einem der vorhergehenden Ansprüche, wobei nach dem Schritt b1) ein Schritt b2) des Zusammenbaus und der gegenseitigen Abdichtung eines oder mehrerer Elemente (12, 13, 14) einer außerhalb der Hauptstruktur befindlichen Hülle mit der Hauptstruktur und gegebenenfalls mit dem Verstärkungselement (24) durchgeführt wird.

5. Verfahren nach einem der vorhergehenden Ansprüche, wobei Schritt b) den Zusammenbau zwischen mindestens zwei Elementen (21', 22', 23') der Hauptstruktur durch ein System von Zapfen/Zapfenlöchern umfasst.

6. Verfahren nach einem der vorhergehenden Ansprüche, wobei der Zyklus des Diffusionsschweißens durch HIP gemäß Schritt c) bei einer Temperatur zwischen 1000 und 1200 °C und bei einem Druck zwischen 500 und 1500 bar durchgeführt wird.

7. Verfahren nach einem der vorhergehenden Ansprüche, wobei der Zyklus des Diffusionsschweißens durch HIP gemäß Schritt c) während einer Dauer zwischen 2 h und 10 h mit einem Temperaturanstieg von einer Dauer zwischen 1 h und 4 h und einem Halten der Temperatur zwischen 1 h und 6 h durchgeführt wird.

8. Verfahren nach einem der vorhergehenden Ansprüche, wobei nach dem Schritt c) ein Schritt d) der Bearbeitung der Außenfläche des Sammlers durchgeführt wird.

9. Verfahren nach einem der vorhergehenden Ansprüche, wobei vor dem Schritt c) der Zusammenbau und die Abdichtung zwischen einem Teil der Elemente des Sammlers und einem Teil eines Wärmetauschers mit mindestens einem Fluidkreislauf durchgeführt werden.

10. Sammler eines Wärmetauschers mit mindestens einem Fluidkreislauf, der gemäß dem Verfahren nach einem der Ansprüche 1 bis 8 erhalten wird.

11. Wärmetauscher mit mindestens einem Fluidkreislauf, welcher mindestens zwei Sammler nach Anspruch 10 umfasst.

12. Verwendung eines Sammlers eines Wärmetauschers nach Anspruch 10 oder eines Wärmetauschers nach Anspruch 11 als Absorber für konzentrierende solarthermische Kraftwerke.

## Claims

1. Method for producing a header for a heat exchanger with at least one fluid circuit, involving the following steps:
a) producing the elements (20, 21, 22, 23, 24, 30, 40) of a heat exchanger header, of which some (20, 21, 22, 23, 30, 40) constitute the main structure with the fluid passage;
b) mechanically assembling the elements (20, 21, 22, 23, 30, 40) of the main structure and, if appropriate, sealing of the joins between the joined elements thus forming a sealed assembly;
b1) mutually assembling and sealing one or more elements (10, 11) of a casing internal to the main structure, with the main structure;
c) carrying out a step of Hot Isostatic Pressing (HIP) diffusion welding of the sealed assembly obtained in step b).

2. Method according to Claim 1, wherein, in step b), a reinforcing element (24) of the main structure and the casing internal to the main structure are also assembled, the assembly with said casing being sealed.

3. Method according to Claim 2, the assembly of said reinforcing element (24) comprising a step of inserting tenons (241, 242) of the reinforcing element (24) respectively into two holes (20, 21) made in opposite elements of the main structure.

4. Method according to any one of the preceding claims, wherein, after step b1), a step b2) of mutually assembling and sealing one or more elements (12, 13, 14) of a casing external to the main structure, with the main structure and, if appropriate, with the reinforcing element (24), is carried out.

5. Method according to any one of the preceding claims, wherein step b) comprises the assembly of at least two elements (21', 22', 23') of the main structure by a system of tenons/mortises.

6. Method according to any one of the preceding claims, the HIP diffusion welding cycle according to step c) being carried out at a temperature of between 1000 and 1200°C and at a pressure of between 500 and 1500 bar.

7. Method according to any one of the preceding claims, the HIP diffusion welding cycle according to step c) being carried out for a duration of between 2 h and 10 h, with a temperature increase with a duration of between 1 h and 4 h and a hold with a duration of between 1 h and 6 h.

8. Method according to any one of the preceding claims, wherein, after step c), a step d) of machining the outer surface of the header is carried out.

9. Method according to any one of the preceding claims, wherein, before step c), the mutual assembly and sealing of some of the elements of the header and a part of a heat exchanger with at least one fluid circuit is carried out.

10. Header for a heat exchanger with at least one fluid circuit, obtained according to the method according to any one of Claims 1 to 8.

11. Heat exchanger with at least one fluid circuit, comprising at least two headers according to Claim 10.

12. Use of a heat exchanger header according to Claim 10 or of a heat exchanger according to Claim 11 as an absorber for high-temperature concentrated solar power plants.
